# EUROPEAN PATENT APPLICATION

(11) **EP 4 561 163 A1**
(43) Date of publication of application: **28.05.2025**
(21) Application number: 23851532.4
(22) Date of filing: 12.07.2023
(51) Int. Cl.: H04W 28/02

(54) **COMMUNICATION METHOD AND APPARATUS, COMMUNICATION DEVICE AND STORAGE MEDIUM**

(30) Priority: 10.08.2022 CN 202210957823
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: WANG, Xiaoyun, Beijing 100053 (CN); WANG, Dan, Beijing 100053 (CN); LI, Yongjing, Beijing 100053 (CN); SUN, Tao, Beijing 100053 (CN); LU, Lu, Beijing 100053 (CN); DUAN, Xiaodong, Beijing 100053 (CN)
(74) Representative: Hertin und Partner Rechts- und Patentanwälte PartG mbB
(86) International application number: PCT/CN2023/107026
(87) International publication number: WO 2024/032309

(57) **Abstract**

A communication method, a communication apparatus, a communication device and a storage medium are provided. The method includes: receiving, by a first network function, first information from a first function, the first information being information related to network congestion control; generating, by the first network function, policy information at least based on the first information, and sends, by the first network function, the policy information to another network function and/or User Equipment (UE).

## Description

### CROSS-REFERENCE TO RELATED APPLICATIONS

The present disclosure is based on, and claims the priority of, the Chinese Patent Application No. 202210957823.8 filed on August 10, 2022, a disclosure of which is incorporated herein by reference in its entirety.

### TECHNICAL FIELD

The present disclosure relates to the field of communications technology, and in particular, to a communication method, a communication apparatus, a communication device and a storage medium.

### BACKGROUND

A core idea of a currently proposed congestion control scheme is to set a fixed bit position in the IP header of the message at a congestion point. When the bit position is set to 11, it indicates that this node is congested, and this information is passed to a next processing node. The processing node will generate a layer 4 notification based on a certain algorithm and send it to a server, thereby informing the server to adjust a packet sending rate or adjust an encoding method.

### SUMMARY

Embodiments of the present disclosure provide a communication method, a communication apparatus, a communication device, and a storage medium.

The technical solutions according to the embodiments of the present disclosure are implemented as follows.

In a first aspect, an embodiment of the present disclosure provides a communication method, the method including:
receiving, by a first network function, first information from a first function, wherein the first information is information related to network congestion control;
generating, by the first network function, policy information at least based on the first information, and sending, by the first network function, the policy information to another network function and/or a User Equipment (UE).

In some optional embodiments of the present disclosure, the first information includes at least one of the following:
service information;
a Quality of Service (QoS) requirement corresponding to service information;
congestion information;
a marking frequency or duration or time interval of congestion information;
notification information; or
a QoS requirement corresponding to notification information.

In some optional embodiments of the present disclosure, the sending the policy information to the other network function and/or UE includes at least one of the following:
sending, by the first network function, the policy information to a Session Management Function (SMF);
sending, by the first network function, the policy information to a User Plane Function (UPF) through the SMF;
sending, by the first network function, the policy information to an access network device through an Access and Mobility Management Function (AMF); or
sending, by the first network function, the policy information to the UE through an AMF and an access network device.

In some optional embodiments of the present disclosure, service information and QoS requirement corresponding to the service information in the first information are at least used by the UE and/or a UPF to identify data and perform QoS guarantee.

In some optional embodiments of the present disclosure, the congestion information in the first information indicates that an access network device adds congestion information to a data packet when network congestion occurs; or indicates that a UPF adds congestion information to a data packet when network congestion occurs; or indicates that an access network device notifies a UPF to add congestion information to a data packet when network congestion occurs.

In some optional embodiments of the present disclosure, the marking frequency, duration or time interval of the congestion information in the first information indicates a policy of adding congestion information to a data packet by an access network device or a UPF.

In some optional embodiments of the present disclosure, the QoS requirement corresponding to the notification information is at least used to perform corresponding QoS guarantee for the notification information. 8. The method according to claim 1, wherein the generating, by the first network function, the policy information based on the first information, including:
during a session establishment process or a session modification process, generating, by the first network function, the policy information based on the first information.

In a second aspect, an embodiment of the present disclosure further provides a communication method, the method including:
sending, by a first function, first information to a first network function, wherein the first information is information related to network congestion control, and the first information is used to generate corresponding policy information.

In some optional embodiments of the present disclosure, the first information includes at least one of the following:
service information;
a Quality of Service (QoS) requirement corresponding to service information;
congestion information;
a marking frequency or duration or time interval of congestion information;
notification information; or
a QoS requirement corresponding to notification information.

In a third aspect, an embodiment of the present disclosure further provides a communication method, the method including:
receiving, by a communication device, congestion information and sending, by the communication device, first notification information, wherein the first notification information is used to notify that it is currently in a state of network congestion.

In some optional embodiments of the present disclosure, the method further includes: the communication device receives policy information from a first network function, the policy information is generated at least based on first information; the first information is information related to network congestion control; the communication device includes a network device and/or a UE.

In some optional embodiments of the present disclosure, the first information includes at least one of the following:
service information;
a Quality of Service (QoS) requirement corresponding to service information;
congestion information;
a marking frequency or duration or time interval of congestion information;
notification information; or
a QoS requirement corresponding to notification information.

In some optional embodiments of the present disclosure, the sending the first notification information includes: adding, by the communication device, the first notification information to an in-band message, wherein the in-band message is used to perform QoS guarantee based on the QoS requirement corresponding to the first notification information; or
constructing, by the communication device, a message and sending, by the communication device, the first notification information in the constructed message, and the constructed message is used to perform QoS guarantee based on the QoS requirement corresponding to the first notification information.

In some optional embodiments of the present disclosure, the communication device includes the UE; service information and QoS requirement corresponding to the service information in the first information are at least used by the UE to identify data and perform QoS guarantee.

In some optional embodiments of the present disclosure, the QoS requirement corresponding to the notification information in the first information is at least used to perform corresponding QoS guarantee for the notification information.

In some optional embodiments of the present disclosure, in the case that the communication device includes a UE, the method further includes: sending, by the UE, capability indication information, wherein the capability indication information indicates that the UE supports network congestion control.

In a fourth aspect, an embodiment of the present disclosure further provides a communication method, the method including:
adding, by a network function, congestion information to a data packet when the network function detects network congestion, and sending, by the network function, the data packet where the congestion information is added.

In some optional embodiments of the present disclosure, the method further includes: receiving, by the network function, policy information from a first network function, wherein the policy information is generated at least based on first information; the first information is information related to network congestion control.

In some optional embodiments of the present disclosure, the first information includes at least one of the following:
service information;
a Quality of Service (QoS) requirement corresponding to service information;
congestion information;
a marking frequency or duration or time interval of congestion information;
notification information; or
a QoS requirement corresponding to notification information.

In some optional embodiments of the present disclosure, the network function includes at least one of an SMF, a UPF or an access network device;
the receiving, by the network function, the policy information from the first network function, including at least one of the following:
directly receiving, by the SMF, the policy information sent by the first network function;
receiving, by the UPF through the SMF, the policy information sent by the first network function; or
receiving, by the access network device through the AMF, the policy information sent by the first network function.

In some optional embodiments of the present disclosure, service information and QoS requirement corresponding to the service information in the first information are at least used by a UPF to identify data and perform QoS guarantee.

In some optional embodiments of the present disclosure, the congestion information in the first information indicates that an access network device adds the congestion information to the data packet when the network congestion occurs; or indicates that a UPF adds the congestion information to the data packet when the network congestion occurs; or indicates that an access network device notifies a UPF to add the congestion information to the data packet when the network congestion occurs.

In some optional embodiments of the present disclosure, the marking frequency, duration or time interval of the congestion information in the first information indicates a policy of adding the congestion information to the data packet by an access network device or a UPF.

In a fifth aspect, an embodiment of the present disclosure further provides a communication method, the method including:
receiving, by a UE or a second network function, first indication information sent by an access network device, wherein the first indication information is used to indicate support for rapid recovery from a state of network congestion.

In some optional embodiments of the present disclosure, the method further includes: the UE or the second network function sends second notification information, and the second notification information is used to notify the recovery from the state of network congestion and/or adjust the data transmission mode.

In some optional embodiments of the present disclosure, before the receiving, by the UE, the first indication information sent by the access network device, the method further includes: switching, by the UE through a cell handover process, from accessing a first access network device to accessing a second access network device;
the receiving, by the UE, first indication information sent by an access network device includes: receiving, by the UE, first indication information sent by the second access network device.

In some optional embodiments of the present disclosure, the method further includes: receiving, by the UE, a first message through the access network device, and the first message does not include congestion information.

In some optional embodiments of the present disclosure, the sending, by the UE or the second network function, the second notification information, including:
adding, by the UE or the second network function, the second notification information to an in-band message, wherein the in-band message is used to perform QoS guarantee based on a QoS requirement corresponding to the second notification information; or
sending, by the UE or the second network function, the second notification information in a constructed message, wherein the constructed message is used to perform QoS guarantee based on a QoS requirement corresponding to the second notification information.

In some optional embodiments of the present disclosure, the method further includes: sending, by the UE, capability indication information, wherein the capability indication information indicates network congestion control of the UE.

In a sixth aspect, an embodiment of the present disclosure further provides a communication method, the method including:
receiving, by a second access network device, first indication information sent by a first access network device or an AMF, wherein the first indication information is used to indicate support for rapid recovery from a state of network congestion;
sending, by the second access network device, second indication information to a UE when the second access network device recovers from the state of congestion, wherein the second indication information is used to indicate the recovery from the state of network congestion.

In some optional embodiments of the present disclosure, when the second access network device recovers from the state of congestion, the method further includes:
sending, by the second access network, a first message to the UE, and the first message does not include congestion information.

In a seventh aspect, an embodiment of the present disclosure further provides a communication method, the method including:
receiving, by a first access network device, first indication information, wherein the first indication information is used to indicate support for rapid recovery from a state of network congestion;
sending, by the first access network device, the first indication information to a second access network device.

In some optional embodiments of the present disclosure, the receiving, by the first access network device, the first indication information, including:
during a session establishment process, receiving, by the first access network device, the first indication information through one or more network functions.

In some optional embodiments of the present disclosure, the sending, by the first access network device, the first indication information to the second access network device includes: directly sending, by the first access network device, the first indication information to the second access network device; or,
sending, by the first access network device, the first indication information to the second access network device through a first AMF, wherein the first AMF is an AMF commonly accessed by both the first access network device and the second access network device; or
sending, by the first access network device, the first indication information to the second access network device through a third AMF and a second AMF, the third AMF is an AMF accessed by the first access network device, and the second AMF is an AMF connected to the second access network device.

In an eighth aspect, an embodiment of the present disclosure further provides a communication method, the method including:
receiving, by a Policy Control Function (PCF), second information from an Application Function (AF), wherein the second information includes first indication information, wherein the first indication information is used to indicate support for rapid recovery from a state of network congestion;
sending, by the PCF, the first indication information to a first access network device.

In some optional embodiments of the present disclosure, the sending, by the PCF, the first indication information to the first access network device, including:
during a session establishment process, sending, by the PCF, the first indication information to the first access network device through one or more network functions.

In some optional embodiments of the present disclosure, the receiving, by the PCF, the second information from the AF, including:
receiving, by the PCF, the second information from the AF through a Network Exposure Function (NEF).

In a ninth aspect, an embodiment of the present disclosure further provides a communication method, the method including:
sending, by an AF, second information to a PCF, wherein the second information includes first indication information, wherein the first indication information is used to indicate support for rapid recovery from a state of network congestion.

In some optional embodiments of the present disclosure, the sending, by the AF, the second information to the PCF, including:
sending, by the AF, the second information to the PCF through an NEF.

In a tenth aspect, an embodiment of the present disclosure further provides a communication apparatus, applied to a first network function, wherein the communication apparatus includes a first communication unit and a first processing unit; wherein,
the first communication unit is configured to receive first information from a first function, wherein the first information is information related to network congestion control;
the first processing unit is configured to generate policy information at least based on the first information;
the first communication unit is further configured to send the policy information to another network function and/or UE.

In an eleventh aspect, an embodiment of the present disclosure further provides a communication apparatus, applied to a first function, wherein the communication apparatus includes: a second communication unit, configured to send first information to a first network function, the first information being information related to network congestion control, and the first information being used to generate corresponding policy information.

In a twelfth aspect, an embodiment of the present disclosure further provides a communication apparatus, applied to a communication device, wherein the communication apparatus includes a third communication unit, configured to receive congestion information and send first notification information, wherein the first notification information is used to notify that it is currently in a state of network congestion.

In a thirteenth aspect, an embodiment of the present disclosure further provides a communication apparatus, applied to a network function, wherein the communication apparatus includes a second processing unit and a fourth communication unit; wherein,
the second processing unit is configured to add congestion information to a data packet when network congestion is detected;
the fourth communication unit is configured to send the data packet where the congestion information is added.

In a fourteenth aspect, an embodiment of the present disclosure further provides a communication apparatus, applied to a UE or a second network function, wherein the communication apparatus includes a fifth communication unit, configured to receive first indication information sent by an access network device, wherein the first indication information is used to indicate support for rapid recovery from a state of network congestion.

In a fifteenth aspect, an embodiment of the present disclosure further provides a communication apparatus, applied to a second access network device, wherein the communication apparatus including a sixth communication unit, configured to receive first indication information sent by a first access network device or an AMF, wherein the first indication information is used to indicate support for rapid recovery from a state of network congestion, and the sixth communication unit is further configured to send second indication information to a UE when recovering from the congestion state, the second indication information being used to indicate recovery from the state of network congestion.

In a sixteenth aspect, an embodiment of the present disclosure further provides a communication apparatus, applied to a first access network device, wherein the communication apparatus includes a seventh communication unit, configured to receive first indication information sent by a PCF, wherein the first indication information is used to indicate support for rapid recovery from a state of network congestion; and send the first indication information to a second access network device.

In a seventh aspect, an embodiment of the present disclosure further provides a communication apparatus, applied to a PCF, wherein the communication apparatus includes an eighth communication unit, configured to receive second information from an AF, wherein the second information includes first indication information, and the first indication information is used to indicate support for rapid recovery from a state of network congestion; and send the first indication information to a first access network device.

In an eighteenth aspect, an embodiment of the present disclosure further provides a communication apparatus, applied to an AF, wherein the communication apparatus includes a ninth communication unit, configured to send second information to a PCF, the second information includes first indication information, and the first indication information is used to indicate support for rapid recovery from a state of network congestion.

In a nineteenth aspect, an embodiment of the present disclosure further provides a computer-readable storage medium storing a computer program, wherein the computer program is used to cause a processor to execute the steps of the communication method according to any one of the first to ninth aspects of the embodiments of the present disclosure.

In a twentieth aspect, an embodiment of the present disclosure further provides a communication device, including a memory, a processor, and a computer program stored in the memory and executable on the processor, wherein when the processor executes the program, the steps of the communication method according to any one of the first to ninth aspects of the embodiments of the present disclosure are implemented.

According to the communication method, communication apparatus, communication device and storage medium provided by the embodiments of the present disclosure, in the first aspect, the first network function generates corresponding policy information based on the first information, and sends it to another network function and/or UE, so that the other network function and/or UE can perform data processing and/or data transmission based on the policy information, and/or perform corresponding QoS guarantee; in another aspect, with respect to congestion control, in the mobility state, due to the handover of the RAN, the state of network congestion may change rapidly, for example, handing over from a congested RAN to a lightly loaded RAN, the first access network device sends first indication information to the second access network device. When the second access network device determines that it has recovered from the network congestion, the second access network device sends the first indication information. This enables the UE or the second network function to immediately send the second notification information to inform the other party that it has been recovered from the state of network congestion. This allows adjustments to the data transmission mode, such as increasing the number of data packets to be sent, improving the data transmission rate, etc., thereby preventing the other party from remaining in a low-rate sending state for a prolonged period.

### BRIEF DESCRIPTION OF THE DRAWINGS

Fig. 1 is a schematic flowchart of a communication method according to an embodiment of the present disclosure;
Fig. 2 is another schematic flowchart of the communication method according to an embodiment of the present disclosure;
Fig. 3 is yet another schematic flowchart of the communication method according to an embodiment of the present disclosure;
Fig. 4 is still yet another schematic flowchart of the communication method according to an embodiment of the present disclosure;
Fig. 5 is a schematic interaction flowchart of a communication method according to an embodiment of the present disclosure;
Fig. 6 is still yet another schematic flowchart of the communication method according to an embodiment of the present disclosure;
Fig. 7 is still yet another schematic flowchart of the communication method according to an embodiment of the present disclosure;
Fig. 8 is still yet another schematic flowchart t of a communication method according to an embodiment of the present disclosure;
Fig. 9 is still yet another schematic flowchart of a communication method according to an embodiment of the present disclosure;
Fig. 10 is still yet another schematic flowchart of a communication method according to an embodiment of the present disclosure;
Fig. 11 is another schematic interaction flowchart of a communication method according to an embodiment of the present disclosure;
Fig. 12 is yet another schematic interaction flowchart of the communication method according to an embodiment of the present disclosure;
Fig. 13 is a schematic structural diagram of a communication apparatus according to an embodiment of the present disclosure;
Fig. 14 is another schematic structural diagram of the communication apparatus according to an embodiment of the present disclosure;
Fig. 15 is yet another schematic structural diagram of the communication apparatus according to an embodiment of the present disclosure;
Fig. 16 is still yet another schematic structural diagram of the communication apparatus according to an embodiment of the present disclosure;
Fig. 17 is still yet another schematic structural diagram of the communication apparatus according to an embodiment of the present disclosure;
Fig. 18 is still yet another schematic structural diagram of the communication apparatus according to an embodiment of the present disclosure;
Fig. 19 is still yet another schematic structural diagram of the communication apparatus according to an embodiment of the present disclosure;
Fig. 20 is still yet another schematic structural diagram of the communication apparatus according to an embodiment of the present disclosure;
Fig. 21 is still yet another schematic structural diagram of the communication apparatus according to an embodiment of the present disclosure;
Fig. 22 is a schematic hardware structural diagram of the communication device according to an embodiment of the present disclosure.

### DETAILED DESCRIPTION

The present disclosure is further described in detail below with reference to the accompanying drawings and specific embodiments.

The technical solutions of the embodiments of the present disclosure can be applied to various communication systems, such as: Global System of Mobile communication (GSM) system, Long Term Evolution (LTE) system or 5G system, etc. Optionally, the 5G system or 5G network can also be called a New Radio (NR) system or NR network.

For example, the communication system applied in the embodiments of the present disclosure may include a network device and a terminal device (also referred to as a UE, a communication UE, etc.); the network device may be a device that communicates with the terminal device. The network device can provide communication coverage within a certain area, and can communicate with the terminal devices located in the area. Optionally, the network device may be a base station in each communication system, such as an evolved base station (eNB, Evolutional Node B) in an LTE system, or a base station (gNB) in a 5G system or an NR system.

It should be understood that the device with communication function in the network/system in the embodiments of the present application can be referred to as a communication device. The communication device may include a network device and a UE with communication function, and the network device and the UE may be the specific devices described above, which will not be repeated herein; the communication device may also include other devices in the communication system, such as a network controller, a mobile management entity and other network entities, which are not limited in the embodiments of the present disclosure.

It should be understood that the terms "system" and "network" are often used interchangeably in the present disclosure. The term "and/or" in the present disclosure is only a description of the association relationship between associated objects, indicating that there can be three relationships, for example, A and/or B can mean: A exists alone, A and B exist simultaneously, and B exists alone. The symbol "/" generally indicates that the associated objects are in an "or" relationship.

Terms "first", "second" and the like in the specification and claims of the present disclosure are adopted not to describe a specific sequence or order but to distinguish similar objects. It should be understood that data used like this may be interchanged under a proper condition for implementation of the embodiments of the application described herein in a sequence apart from those shown or described herein. In addition, terms "include" and "have" and any variant thereof are intended to cover nonexclusive inclusions. For example, a process, method, system, product or equipment including a series of steps or units is not limited to those steps or units which are clearly listed, but may include other steps or units which are not clearly listed or intrinsic in the process, the method, the product or the equipment.

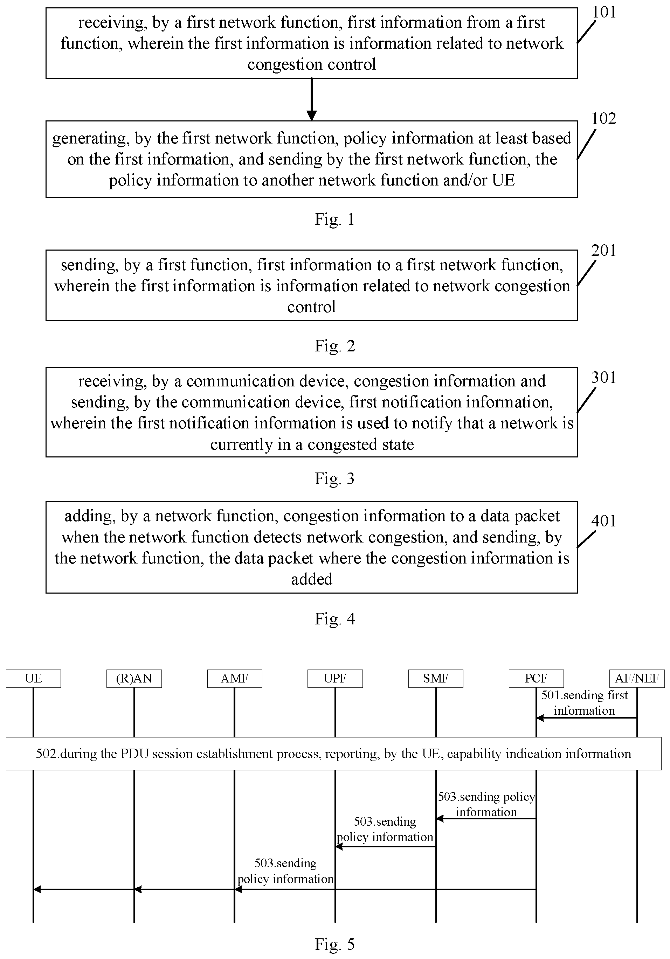

The embodiments of the present disclosure provides a communication method. Fig. 1 is a schematic flowchart of a communication method according to an embodiment of the present disclosure; as shown in Fig. 1, the method includes:
step 101: receiving, by a first network function, first information from a first function, wherein the first information is information related to network congestion control;
step 102: generating, by the first network function, policy information at least based on the first information, and sending, by the first network function, the policy information to another network function and/or UE.

In the embodiments of the present disclosure, the first network function is a network element with policy provision capability. For example, the first network function may be a Policy Control Function (PCF) in a 5G system; or may be other network elements with policy provision capability in a 6G and subsequent systems, which are not specifically limited herein. The first function may be, for example, an Application Function (AF) or an Application Server (AS) in a 5G system.

In some embodiments of the present disclosure, in the case that the first function is the AF, the first network function may receive the first information from the AF through a Network Exposure Function (NEF).

In some optional embodiments, the first information includes at least one of the following: service information; a Quality of Service (QoS) requirement corresponding to service information; congestion information; a marking frequency or duration or time interval of congestion information; notification information; or a QoS requirement corresponding to notification information.

The service information may specifically be characteristic information of a service or a message or a data packet; for example, the service information may specifically include at least one of the following: IP five-tuple information, IP flow information, application information, and the like.

The QoS requirement is specifically a QoS requirement corresponding to the service information, such as a delay requirement, a bandwidth requirement, and the like.

The congestion information may specifically be marking information indicating congestion; for example, the carrying of congestion information in a message or data packet may mean that the message or data packet carries a mark indicating congestion.

The marking frequency, duration or time interval of the congestion information indicates the frequency, duration or time interval of adding a mark indicating congestion (or congestion information) to a message or data packet when the network is currently in a congested state. For example, a mark indicating congestion (or congestion information) may be added to each message or data packet, or a mark indicating congestion (or congestion information) may be added to a message or data packet at an interval of several messages or a certain period of time.

The notification information may specifically be characteristic information of the notification information; for example, the notification information may specifically include at least one of the following: IP five-tuple information, IP flow information, application information, etc. The notification information may specifically be used to notify that it is currently in the state of network congestion or it has been recovered from the state of network congestion. In some optional embodiments, the notification information may specifically be layer 4 (L4) notification information.

In some optional embodiments, sending the policy information to another network function and/or UE includes at least one of the following:
sending, by the first network function, the policy information to a Session Management Function (SMF);
sending, by the first network function, the policy information to a User Plane Function (UPF) through the SMF;
sending, by the first network function, the policy information to an access network device through an Access and Mobility Management Function (AMF); or
sending, by the first network function, the policy information to the UE through an AMF and an access network device.

In the embodiments of the present disclosure, the first network function generates policy information at least based on the first information, and the policy information may include at least part of the content of the first information. In some embodiments, the policy information sent by the first network function to each network function and/or UE may be the same or different. For example, when the UE and the UPF mainly identify messages or data (or data packets), the policy information sent to the UE and the UPF may carry policy information related to the identification of messages or data (or data packets). For another example, when the UPF and the access network device detects that its own node is in a state of network congestion, it needs to add congestion information to the message or data (or data packet), then the policy information sent to the UPF and the access network device may carry policy information related to the addition of congestion information.

In some optional embodiments, service information and QoS requirement corresponding to the service information in the first information are at least used by the UE and/or UPF to identify data and perform QoS guarantee.

In some optional embodiments, the congestion information in the first information indicates that the access network device adds congestion information to the data packet when network congestion occurs; or indicates that the UPF adds congestion information to the data packet when network congestion occurs; or indicates that the access network device notifies the UPF to add congestion information to the data packet when network congestion occurs.

In some optional embodiments, the marking frequency, duration or time interval of the congestion information in the first information indicates a policy of adding congestion information to a data packet by an access network device or a UPF.

In some optional embodiments, the QoS requirement corresponding to the notification information is at least used to perform corresponding QoS guarantee for the notification information.

In some optional embodiments, the generating, by the first network function, the policy information based on the first information, including: during a session establishment process or a session modification process, generating, by the first network function, the policy information based on the first information.

According to the above embodiments, the present disclosure further provides a communication method. Fig. 2 is another schematic flowchart of the communication method according to an embodiment of the present disclosure; as shown in Fig. 2, the method includes:
step 201: sending, by a first function, first information to a first network function, wherein the first information is information related to network congestion control, and the first information is used to generate corresponding policy information.

In some optional embodiments, the first function may be, for example, an AF or an Application Server (AS) in a 5G system.

In some embodiments, in the case that the first function is the AF, the AF may send the first information to the first network function through the NEF.

In some embodiments, the first information includes at least one of: service information; a Quality of Service (QoS) requirement corresponding to service information; congestion information; a marking frequency or duration or time interval of congestion information; notification information; or a QoS requirement corresponding to notification information.

The service information may specifically be characteristic information of a service or a message or a data packet; for example, the service information may specifically include at least one of the following: IP five-tuple information, IP flow information, application information, and the like.

The QoS requirement is specifically the QoS requirement corresponding to the service information.

The congestion information may specifically be marking information indicating congestion; for example, the carrying of congestion information in a message or data packet may mean that the message or data packet carries a mark indicating congestion.

The marking frequency, duration or time interval of the congestion information indicates the frequency, duration or time interval of adding a mark indicating congestion (or congestion information) to a message or data packet when the network is currently in a congested state. For example, a mark indicating congestion (or congestion information) may be added to each message or data packet, or a mark indicating congestion (or congestion information) may be added to a message or data packet at an interval of several messages or a certain period of time.

The notification information may specifically be characteristic information of the notification information; for example, the notification information may specifically include at least one of the following: IP five-tuple information, IP flow information, application information, etc. The notification information may specifically be used to notify that it is currently in the state of network congestion or it has been recovered from the state of network congestion. In some optional embodiments, the notification information may specifically be layer 4 (L4) notification information.

According to the above embodiments, the present disclosure further provides a communication method. Fig. 3 is yet another schematic flowchart of the communication method according to an embodiment of the present disclosure; as shown in Fig. 3, the method includes:
step 301: receiving, by a communication device, congestion information and sending, by the communication device, first notification information, wherein the first notification information is used to notify that a network is currently in a congested state.

In the embodiments of the present disclosure, the communication device may be a UE or a network side device (such as AS).

In the embodiments of the present disclosure, during the transmission of a message or data (or data packet), when it is transmitted to a certain network node and the network node is in a state of network congestion, the network node adds congestion information to the message or data (or data packet); when the UE receives the message or data (or data packet), it receives the congestion information, and the UE generates first notification information indicating that the network is currently in a congestion state, and sends the first notification information, which can be received by the AS at the network side; or, when the network side device (such as AS) receives a message or data (or data packet) carrying congestion information, it receives the congestion information, and the network side device (such as AS) generates first notification information indicating that the network is currently in a congestion state, and sends the first notification information, which can be received by the UE. The UE or network side device that receives the first notification information can adjust the data transmission mode, such as reducing the number of data packets to be sent, reducing the data transmission rate, etc.

In some optional embodiments of the present disclosure, the method further includes: the communication device receives policy information from a first network function, and the policy information is generated at least based on first information; the first information is information related to network congestion control; the communication device includes a network device and/or a UE.

In some optional embodiments, the first information includes at least one of the following: service information; a Quality of Service (QoS) requirement corresponding to service information; congestion information; a marking frequency or duration or time interval of congestion information; notification information; or a QoS requirement corresponding to notification information.

In the embodiments of the present disclosure, the communication device may perform the step 301 based on the policy information issued by the first network function, that is, receive congestion information, generate and send the first notification information. The policy information may include at least part of the content of the first information. Then the communication device may identify the message or data based on the notification information in the first information, recognizing that the message or data is notification information; on the other hand, the communication device may perform QoS guarantee for the transmission of the notification information based on the QoS requirement corresponding to the notification information in the first information.

In some optional embodiments of the present disclosure, the sending the first notification information includes: adding, by the communication device, the first notification information to an in-band message, wherein the in-band message is used to perform QoS guarantee based on the QoS requirement corresponding to the first notification information; or constructing, by the communication device, a message and sending, by the communication device, the first notification information in the constructed message, and the constructed message is used to perform QoS guarantee based on the QoS requirement corresponding to the first notification information.

In the embodiments of the present disclosure, the first notification information can be sent based on the in-band data or the in-band message, or a temporary message can be constructed to send the first notification information. Both the in-band data (or message) and the temporary message are used to perform QoS guarantee based on the QoS requirement corresponding to the first notification information. For example, the corresponding 5G QoS Identifier (5QI) can be activated to carry the first notification information.

In some optional embodiments, the communication device includes the UE; service information and QoS requirement corresponding to the service information in the first information are at least used by the UE to identify data and perform QoS guarantee.

In some optional embodiments, the QoS requirement corresponding to the notification information in the first information is at least used to perform corresponding QoS guarantee for the notification information.

In some optional embodiments of the present disclosure, in the case that the communication device includes a UE, the method further includes: sending, by the UE, capability indication information, wherein the capability indication information indicates that the UE supports network congestion control.

In the embodiments of the present disclosure, the UE may send capability indication information indicating that the UE supports services that provide network congestion control during a session establishment process, such as a Protocol Data Unit (PDU) session establishment process. The capability indication information may be sent to the AMF during the session establishment process, and then send it to the SMF and other network functions, so that each network function can be informed that the UE has the capability to support network congestion control. In the subsequent data transmission process, congestion information may be added to the message or data based on the capability when network congestion is detected.

According to the above embodiments, the present disclosure further provides a communication method. Fig. 4 is still yet another schematic flowchart of the communication method according to an embodiment of the present disclosure; as shown in Fig. 4, the method includes:
step 401: adding, by a network function, congestion information to a data packet when the network function detects network congestion, and sending, by the network function, the data packet where the congestion information is added.

In the embodiments of the present disclosure, the network function may specifically be each network node or network element that the data may pass through during the data transmission process, for example, it may be a UPF, an access network device (or a Radio Access Network (RAN)), etc.

In the embodiments of the present disclosure, during the transmission process of a message or data (or data packet), when it is transmitted to a certain network function and the network function is in a state of network congestion, the network function adds congestion information to the message or data (or data packet) and continues to send the message or data (or data packet) where the congestion information is added, so that the UE or network side device (AS) receives the message or data (or data packet) where the congestion information is added, and thus is informed of the state of network congestion, so that the data transmission mode can be adjusted in time, such as reducing the number of data packets to be sent, reducing the data transmission rate, etc.

In some optional embodiments of the present disclosure, the method further includes: receiving, by the network function, policy information from a first network function, wherein the policy information is generated at least based on first information; the first information is information related to network congestion control.

In some optional embodiments, the first information includes at least one of the following: service information; a Quality of Service (QoS) requirement corresponding to service information; congestion information; a marking frequency or duration or time interval of congestion information; notification information; or a QoS requirement corresponding to notification information.

In the embodiments of the present disclosure, the network function may perform step 401 based on the policy information issued by the first network function, that is, when network congestion is detected, the congestion information is added to the data packet, and the data packet where the congestion information is added is sent. The policy information may include at least part of the content of the first information. The network function may identify based on the congestion information in the first information, and on the other hand, congestion information may also be added to the message or data (or data packet) through the marking frequency or duration or time interval of the congestion information.

In some optional embodiments, the network function includes at least one of an SMF, a UPF or an access network device; the receiving, by the network function, the policy information from the first network function, including at least one of the following:
directly receiving, by the SMF, the policy information sent by the first network function;
receiving, by the UPF through the SMF, the policy information sent by the first network function; or
receiving, by the access network device through the AMF, the policy information sent by the first network function.

In some optional embodiments, service information and QoS requirement corresponding to the service information in the first information are at least used by the UPF to identify data and perform QoS guarantee.

In some optional embodiments, the congestion information in the first information indicates that the access network device adds congestion information to the data packet when the network congestion occurs; or indicates that the UPF adds congestion information to the data packet when network congestion occurs; or indicates that the access network device notifies the UPF to add congestion information to the data packet when network congestion occurs.

In some optional embodiments, the marking frequency or duration or time interval of the congestion information in the first information indicates a policy of adding congestion information to a data packet by an access network device or a UPF.

The communication methods of the embodiments of the present disclosure are described below with reference to specific examples. In the following examples, the first network function is the PCF and the first function is the AF.

### Example 1

Fig. 5 is a schematic interaction flowchart of a communication method according to an embodiment of the present disclosure; as shown in Fig. 5, the method includes:
step 501: sending, by the AF, first information to the PCF, wherein the first information is information related to network congestion control.

The first information includes at least one of the following: service information; a Quality of Service (QoS) requirement corresponding to service information; congestion information; a marking frequency or duration or time interval of congestion information; notification information; or a QoS requirement corresponding to notification information.

Step 502: during the PDU session establishment process, reporting, by the UE, capability indication information, wherein the capability indication information indicates that the UE supports network congestion control.

The capability indication information reported by the UE is carried in the 5G Session Management capability (SM capability).

Step 503: during the PDU session establishment process or the PDU session establishment modification process, generating, by the PCF, policy information and sends the policy information to the SMF, UPF, RAN and UE.

For example, the UE may send, based on the policy information, a first notification message after receiving congestion information. The first notification message is used to notify that the network is currently in a congested state; the first notification message is used to perform QoS guarantee based on the corresponding QoS requirement. In another example, the UE and/or UPF may also identify and guarantee QoS for uplink and downlink data based on the policy information. In yet another example, the UPF or RAN may also add, based on the policy information, congestion information to the data packet when network congestion occurs at the node of the UPF or RAN; or when network congestion occurs at the RAN, the RAN notifies the UPF to add congestion information to the data packet.

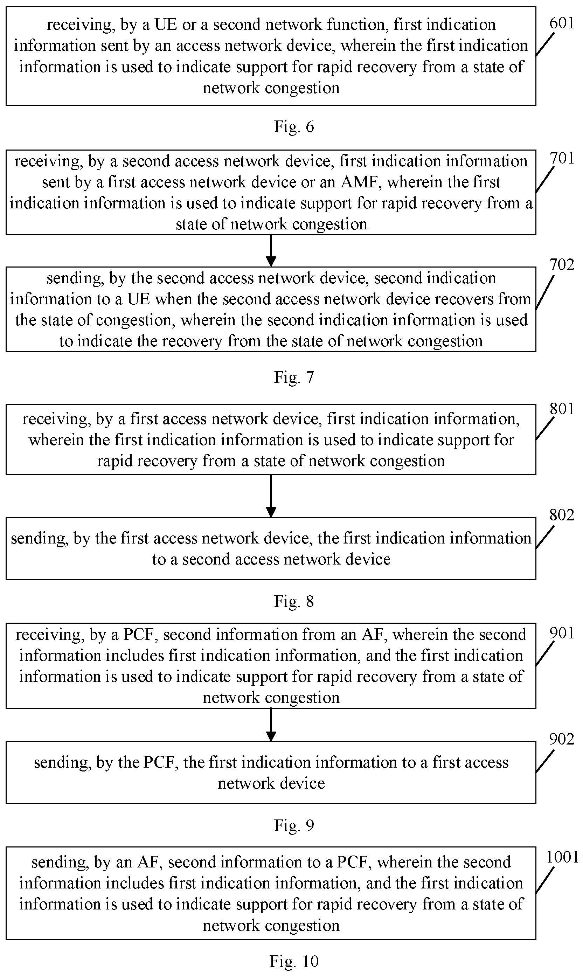

According to the above embodiments, the present disclosure further provides a communication method. Fig. 6 is still yet another schematic flowchart of the communication method according to an embodiment of the present disclosure; as shown in Fig. 6, the method includes:
step 601: receiving, by a UE or a second network function, first indication information sent by an access network device, wherein the first indication information is used to indicate support for rapid recovery from a state of network congestion.

In some optional embodiments, the method further includes: sending, by the UE or the second network function, second notification information, wherein the second notification information is used to notify the recovery from the state of network congestion and/or adjust the data transmission mode.

In the embodiments of the present disclosure, the second notification information sent by the UE is sent to the network side device (such as AS), or the second notification information sent by the second network function is sent to the UE to inform the other party that it has been recovered from the state of network congestion. This allows adjustments to the data transmission mode, such as increasing the number of data packets to be sent, improving the data transmission rate, etc.

In some optional embodiments, before the receiving, by the UE, the first indication information sent by the access network device, the method further includes: switching, by the UE through a cell handover process, from accessing a first access network device to accessing a second access network device; accordingly, the receiving, by the UE, first indication information sent by an access network device includes: receiving, by the UE, first indication information sent by the second access network device.

In the embodiments of the present disclosure, for example, the first access network device may be a source base station, and the second access network device may be a destination base station.

In some optional embodiments, the method further includes: receiving, by the UE, a first message through the access network device, and the first message does not include congestion information.

In the embodiments of the present disclosure, since it has been recovered from the state of network congestion, each network function or network node does not add congestion information to the message or data (or data packet) during data transmission. For example, when the UE or the second network function receives the message or data (or data packet) without adding congestion information, and/or receives the first indication information, the second notification information is sent.

In some optional embodiments, the sending, by the UE or the second network function, the second notification information, including:
adding, by the UE or the second network function, the second notification information to an in-band message, wherein the in-band message is used to perform QoS guarantee based on a QoS requirement corresponding to the second notification information; or sending, by the UE or the second network function, the second notification information in a constructed message, wherein the constructed message is used to perform QoS guarantee based on a QoS requirement corresponding to the second notification information.

In the embodiments of the present disclosure, the second notification information can be sent based on the in-band data or the in-band message, or a temporary message can be constructed to send the second notification information. Both the in-band data (or message) and the temporary message perform QoS guarantee based on the QoS requirement corresponding to the second notification information. For example, the corresponding 5G QoS Identifier (5QI) can be activated to carry the second notification information.

In some optional embodiments of the present disclosure, the method further includes: sending, by the UE, capability indication information, wherein the capability indication information indicates that the UE supports network congestion control.

In the embodiments of the present disclosure, the UE can send, during the session establishment process (e.g., the PDU session establishment process), for example, the capability indication information to the AMF, and then it is sent to the SMF and other network functions, so that each network function can be informed that the UE has the capability to support network congestion control. In the subsequent data transmission process, the first indication information can be received and/or the second notification information can be sent based on the capability.

According to the above embodiments, the present disclosure further provides a communication method. Fig. 7 is still yet another schematic flowchart of the communication method according to an embodiment of the present disclosure. As shown in Fig. 7, the method includes:
step 701: receiving, by a second access network device, first indication information sent by a first access network device or an AMF, wherein the first indication information is used to indicate support for rapid recovery from a state of network congestion;
Step 702: sending, by the second access network device, second indication information to a UE when the second access network device recovers from the state of congestion, wherein the second indication information is used to indicate the recovery from the state of network congestion.

This embodiment is applicable to the handover scenario, that is, the scenario wherein the UE switches access from the first access network device to the second access network device. For example, the first access network device may be a source base station, and the second access network device may be a destination base station. In this scenario, as an implementation method, the first access network device first obtains the first indication information from other network functions or network nodes, and then sends the first indication information to the second access network device. As another implementation method, the second access network device may also obtain the first indication information from the accessed AMF.

In some optional embodiments, the method further includes: sending, by the second access network device, the first indication information to the UE.

In some optional embodiments, when the second access network device recovers from the state of congestion, the method further includes: sending, by the second access network, a first message to the UE, and the first message does not include congestion information.

In the embodiments of the present disclosure, the first message not including the congestion information may be equivalent to the second indication information mentioned above, that is, it indicates that it has been recovered from the state of network congestion.

According to the above embodiments, the present disclosure further provides a communication method. Fig. 8 is still yet another schematic flowchart t of a communication method according to an embodiment of the present disclosure. As shown in Fig. 8, the method includes:
step 801: receiving, by a first access network device, first indication information, wherein the first indication information is used to indicate support for rapid recovery from a state of network congestion;
step 802: sending, by the first access network device, the first indication information to a second access network device.

This embodiment is applicable to a handover scenario, that is, a scenario in which a UE switches access from a first access network device to a second access network device. For example, the first access network device may be a source base station, and the second access network device may be a destination base station. In this scenario, as an implementation method, the first access network device first obtains the first indication information from other network functions, and then sends the first indication information to the second access network device.

In some optional embodiments, the receiving, by the first access network device, the first indication information, including: during a session establishment process, receiving, by the first access network device, the first indication information through one or more network functions.

In some optional embodiments, the sending, by the first access network device, the first indication information to the second access network device includes: directly sending, by the first access network device, the first indication information to the second access network device; or, sending, by the first access network device, the first indication information to the second access network device through a first AMF, wherein the first AMF is an AMF commonly accessed by both the first access network device and the second access network device; or sending, by the first access network device, the first indication information to the second access network device through a third AMF and a second AMF, the third AMF is an AMF accessed by the first access network device, and the second AMF is an AMF connected to the second access network device.

According to the above embodiments, the present disclosure further provides a communication method. Fig. 9 is still yet another schematic flowchart of a communication method according to an embodiment of the present disclosure. As shown in Fig. 9, the method includes:
step 901: receiving, by a Policy Control Function (PCF), second information from an Application Function (AF), wherein the second information includes first indication information, wherein the first indication information is used to indicate support for rapid recovery from a state of network congestion;
step 902: sending, by the PCF, the first indication information to a first access network device.

In some optional embodiments, the sending, by the PCF, the first indication information to the first access network device, including: during a session establishment process, sending, by the PCF, the first indication information to the first access network device through one or more network functions

In some optional embodiments, the receiving, by the PCF, the second information from the AF, including: receiving, by the PCF, the second information from the AF through a Network Exposure Function (NEF).

In the technical solutions of the embodiments of the present disclosure, with respect to congestion control, in the mobility state, due to the handover of the RAN, the state of network congestion may change rapidly, for example, switching from a congested RAN to a lightly loaded RAN, the first access network device sends first indication information to the second access network device. When the second access network device determines that it has recovered from the network congestion, the data sent by the second access network device does not carry the congestion information, and sends the first indication information at the same time. This enables the UE or the second network function to immediately send the second notification information to inform the other party that it has been recovered from the state of network congestion. This allows adjustments to the data transmission mode, such as increasing the number of data packets to be sent, improving the data transmission rate, etc., thereby preventing the other party from remaining in a low-rate sending state for a prolonged period.

According to the above embodiments, the present disclosure further provides a communication method. Fig. 10 is still yet another schematic flowchart of a communication method according to an embodiment of the present disclosure. As shown in Fig. 10, the method includes:
step 1001: sending, by an AF, second information to a PCF, wherein the second information includes first indication information, and the first indication information is used to indicate support for rapid recovery from a state of network congestion.

In some optional embodiments, the sending, by the AF, the second information to the PCF, including: sending, by the AF, the second information to the PCF through an NEF.

The communication methods of the embodiments of the present disclosure are described in detail below with reference to specific examples. In the following examples, the first network function is the PCF and the first function is the AF.

### Example 2

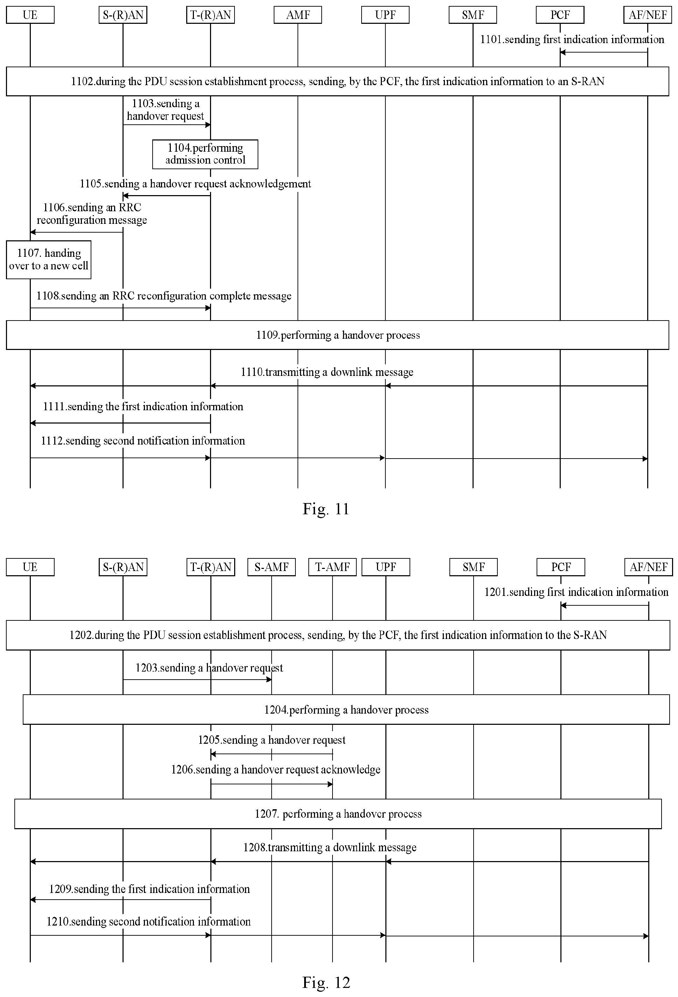

This example is based on the handover of an Xn interface. Fig. 11 is another schematic interaction flowchart of a communication method according to an embodiment of the present disclosure; as shown in Fig. 11, the method includes the following steps.

Step 1101: sending, by the AF, first indication information to the PCF; wherein the first indication information is used to indicate support for rapid recovery from a state of network congestion.

Step 1102: a PDU session establishment process. During the PDU session establishment process, sending, by the PCF, the first indication information to an S-RAN (S-RAN may represent a source base station).

Step 1103: sending, by the S-RAN, a handover request to a T-RAN (T-RAN may represent a destination base station), wherein the handover request includes the first indication information.

Step 1104: performing, by the T-RAN, admission control to confirm the approval of UE access.

Step 1105: sending, by the T-RAN, a handover request acknowledgement to the S-RAN.

Step 1106: sending, by the S-RAN, a Radio Resource Control (RRC) reconfiguration (RRCreconfiguration) message to the UE.

Step 1107: handing over, by the UE, to a new cell.

Step 1108: sending, by the UE, an RRC reconfiguration complete message to the T-RAN.

Step 1109: performing, by the UE, a handover process with each network device.

This step may specifically include: performing handover preparation between the UE and the T-RAN; executing handover between the UE and the T-RAN; the T-RAN sends an N2 Path Switch request to the AMF; the AMF sending a request to the SMF, which may be, for example, an Nsmf_PDUSession_UpdateSMContext Request; the SMF sending a session modification request (N4 Session Modification Request) to the UPF; the UPF sending a session modification response (N4 Session Modification Response) to the SMF; the UPF also sending an N3End marker to the S-RAN; the S-RAN sending an N3End marker to the T-RAN; at this point, data transmission between the UE and the UPF can be performed through the T-RAN. The SMF sends a response to the AMF, such as an Nsmf_PDUSession_UpdateSMContext Response; the AMF sends an N2 Path Switch request acknowledgment (N2 Path Switch request Ack) to the T-RAN; the T-RAN sends a Release Resources message to the S-RAN.

Step 1110: transmitting a downlink message. The downlink message does not carry congestion information, which indicates that it has been recovered from the state of network congestion.

Step 1111: sending, by the T-RAN, the first indication information to the UE.

Step 1112: sending, by the UE, second notification information, wherein the second notification information is used to notify the recovery from the state of network congestion and/or adjust the data transmission mode.

### Example 3

This example is based on the handover of an N2 interface. Fig. 12 is yet another schematic interaction flowchart of the communication method according to an embodiment of the present disclosure; as shown in Fig. 12, the method includes the following steps.

Step 1201: sending, by the AF, first indication information to the PCF; the first indication information is used to indicate support for rapid recovery from a state of network congestion.

Step 1202: a PDU session establishment process. During the PDU session establishment process, sending, by the PCF, the first indication information to the S-RAN (the S-RAN may represent a source base station).

Step 1203: sending, by the S-RAN, a handover request to the S-AMF (the S-AMF may represent a source AMF), and the handover request includes the first indication information.

Step 1204: performing, by the UE, a handover process with each network device.

This step may specifically include: the S-AMF selecting the T-AMF (T-AMF may represent the destination AMF); the S-AMF sending a request to the T-AMF, such as an Namf_Communication_CreateUEContext request; the T-AMF sending a request to the SMF, such as an Nsmf_PDUSession_UpdateSMContext Request; the SMF selecting the UPF; the SMF sending an N4 Session Modification Request to the anchor UPF; the anchor UPF sending an N4 Session Modification Response to the SMF; the SMF sending an N4 Session Establishment Request to the T-UPF; the T-UPF sending an N4 Session Establishment Response to the SMF; the SMF sending a response to the T-AMF, which may be, for example, Nsmf_PDUSession_UpdateSMContext Response; the T-AMF performing PDU Handover Response Supervision.

The S-AMF sends the first indication information to the T-AMF.

Step 1205: sending, by the T-AMF, a handover request to the T-RAN, wherein the handover request includes the first indication information.

Step 1206: sending, by the T-RAN, a handover request acknowledge ACK to the T-AMF.

Step 1207: performing, by the UE, a handover process with each network device.

This step may specifically include: the T-AMF sending a request to the SMF, the request is, for example, an Nsmf_PDUSession_UpdateSMContext Request; the SMF sending an N4 Session Modification Request to the T-UPF; the T-UPF sending an N4 Session Modification Response to the SMF; the SMF sending an N4 Session Modification Request to the S-UPF; the S-UPF sending an N4 Session Modification Response to the SMF; the SMF sending a response to the T-AMF, which may be, for example, an Nsmf_PDUSession_UpdateSMContext Response; the T-AMF sending a response to the S-AMF, the response is, for example, an Namf_Communication_CreateUEContext Response.

Step 1208: transmitting a downlink message. The downlink message does not carry congestion information, which indicates that it has been recovered from the state of network congestion.

Step 1209: sending, by the T-RAN, the first indication information to the UE.

Step 1210: sending, by the UE, second notification information, wherein the second notification information is used to notify the recovery from the state of network congestion and/or adjust the data transmission mode.

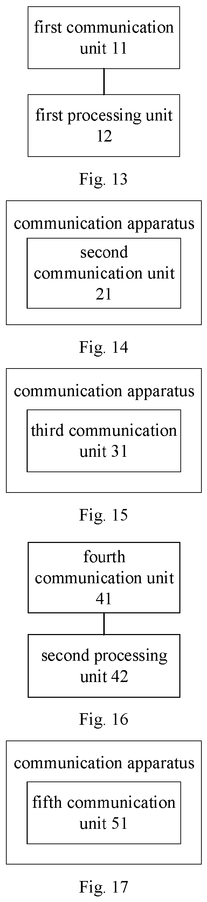

The present disclosure further provides a communication apparatus, applied to a first network function. Fig. 13 is a schematic structural diagram of a communication apparatus according to an embodiment of the present disclosure; as shown in Fig. 13, the apparatus includes a first communication unit 11 and a first processing unit 12; wherein,
the first communication unit 11 is configured to receive first information from a first function, wherein the first information is information related to network congestion control;
the first processing unit 12 is configured to generate policy information at least based on the first information;
the first communication unit 11 is further configured to send the policy information to another network function and/or UE.

In some optional embodiments of the present disclosure, the first information includes at least one of the following: service information; a Quality of Service (QoS) requirement corresponding to service information; congestion information; a marking frequency or duration or time interval of congestion information; notification information; or a QoS requirement corresponding to notification information.

In some optional embodiments of the present disclosure, the first communication unit 11 is configured to send the policy information to another network function and/or UE, including at least one of the following: sending the policy information to the SMF; sending the policy information to the UPF through the SMF; sending the policy information to an access network device through the AMF; or sending the policy information to the UE through the AMF and the access network device.

In some optional embodiments of the present disclosure, service information and QoS requirement corresponding to the service information in the first information are at least used by the UE and/or the UPF to identify data and perform QoS guarantee.

In some optional embodiments of the present disclosure, the congestion information in the first information indicates that the access network device adds congestion information to the data packet when network congestion occurs; or indicates that the UPF adds congestion information to the data packet when network congestion occurs; or indicates that the access network device notifies the UPF to add congestion information to the data packet when network congestion occurs.

In some optional embodiments of the present disclosure, the marking frequency, duration or time interval of the congestion information in the first information indicates a policy of adding congestion information to a data packet by an access network device or a UPF.

In some optional embodiments of the present disclosure, the QoS requirement corresponding to the notification information is at least used to perform corresponding QoS guarantee for the notification information.

In some optional embodiments of the present disclosure, the first processing unit 12 is configured to generate policy information based on the first information by the first network function during a session establishment process or a session modification process.

In the embodiments of the present disclosure, the first processing unit 12 in the apparatus may be implemented in practical applications through a Central Processing Unit (CPU), Digital Signal Processor (DSP), Microcontroller Unit (MCU), or Field-Programmable Gate Array (FPGA); the first communication unit 11 in the apparatus may be implemented in practical applications through a communication module (including: a basic communication kit, an operating system, a communication module, a standardized interface and a protocol, etc.) and a transceiver antenna.

The embodiments of the present disclosure further provide a communication apparatus, applied to a first function. Fig. 14 is another schematic structural diagram of the communication apparatus according to an embodiment of the present disclosure; as shown in Fig. 14, the apparatus includes: a second communication unit 21, configured to send first information to the first network function, the first information is information related to network congestion control, and the first information is used to generate corresponding policy information.

In some optional embodiments of the present disclosure, the first information includes at least one of the following: service information; a Quality of Service (QoS) requirement corresponding to service information; congestion information; a marking frequency or duration or time interval of congestion information; notification information; or a QoS requirement corresponding to notification information.

In the embodiments of the present disclosure, the second communication unit 21 in the apparatus may be implemented in practical applications through a communication module (including: a basic communication kit, an operating system, a communication module, a standardized interface and a protocol, etc.) and a transceiver antenna.

The present disclosure further provides a communication apparatus, applied to a communication device. Fig. 15 is yet another schematic structural diagram of the communication apparatus according to an embodiment of the present disclosure; as shown in Fig. 15, the apparatus includes a third communication unit 31, configured to receive congestion information and send first notification information, wherein the first notification information is used to notify that the network is currently in a congested state.

In some optional embodiments of the present disclosure, the third communication unit 31 is further configured to receive policy information from the first network function, and the policy information is generated at least based on first information; the first information is information related to network congestion control; and the communication device includes a network device and/or a UE.

In some optional embodiments of the present disclosure, the first information includes at least one of the following: service information; a Quality of Service (QoS) requirement corresponding to service information; congestion information; a marking frequency or duration or time interval of congestion information; notification information; or a QoS requirement corresponding to notification information.

In some optional embodiments of the present disclosure, the third communication unit 31 is configured to add the first notification information in an in-band message, wherein the in-band message is used to perform QoS guarantee based on the QoS requirement corresponding to the first notification information; or, to send the first notification information in a constructed message, and the constructed message is used to perform QoS guarantee based on the QoS requirement corresponding to the first notification information.

In some optional embodiments of the present disclosure, the communication device includes a UE; service information and QoS requirement corresponding to the service information in the first information are at least used by the UE to identify uplink and downlink data and perform QoS guarantee.

In some optional embodiments of the present disclosure, the QoS requirement corresponding to the notification information in the first information is at least used to perform corresponding QoS guarantee for the notification information.

In some optional embodiments of the present disclosure, in the case that the communication device includes a UE, the third communication unit is further configured to send capability indication information, wherein the capability indication information indicates that the UE supports a service that provides network congestion control.

In the embodiments of the present disclosure, the third communication unit 31 in the apparatus may be implemented in practical applications through a communication module (including: a basic communication kit, an operating system, a communication module, a standardized interface and a protocol, etc.) and a transceiver antenna.

The present disclosure further provides a communication apparatus, applied to a network function. Fig. 16 is still yet another schematic structural diagram of the communication apparatus according to an embodiment of the present disclosure; as shown in Fig. 16, the apparatus includes a second processing unit 42 and a fourth communication unit 41; wherein,
the second processing unit 42 is configured to add congestion information to a data packet when network congestion is detected;
the fourth communication unit 41 is configured to send a data packet where the congestion information is added.

In some optional embodiments of the present disclosure, the fourth communication unit 41 is further configured to receive policy information from the first network function, wherein the policy information is generated at least based on first information; the first information is information related to network congestion control.

In some optional embodiments of the present disclosure, the first information includes at least one of the following: service information; a Quality of Service (QoS) requirement corresponding to service information; congestion information; a marking frequency or duration or time interval of congestion information; notification information; or a QoS requirement corresponding to notification information.

In some optional embodiments of the present disclosure, the network function includes at least one of an SMF, a UPF or an access network device; the fourth communication unit 41 is configured to receive policy information from the first network function, including at least one of the following: directly receiving policy information sent by the first network function; receiving policy information sent by the first network function through the SMF; or receiving policy information sent by the first network function through the AMF.

In some optional embodiments of the present disclosure, service information and QoS requirement corresponding to the service information in the first information are at least used by UPF to identify data and perform QoS guarantee.

In some optional embodiments of the present disclosure, the congestion information in the first information indicates that the access network device adds congestion information to the data packet when network congestion occurs; or indicates that the UPF adds congestion information to the data packet when network congestion occurs; or indicates that the access network device notifies the UPF to add congestion information to the data packet when network congestion occurs.

In some optional embodiments of the present disclosure, the marking frequency, duration or time interval of the congestion information in the first information indicates a policy of adding congestion information to a data packet by an access network device or a UPF.

In the embodiments of the present disclosure, the second processing unit 42 in the apparatus may be implemented in practical applications through a CPU, a DSP, an MCU or an FPGA; the fourth communication unit 41 in the apparatus may be implemented in practical applications through a communication module (including: a basic communication kit, an operating system, a communication module, a standardized interface and a protocol, etc.) and a transceiver antenna.

The embodiments of the present disclosure further provide a communication apparatus, applied to a UE or a second network function. Fig. 17 is still yet another schematic structural diagram of the communication apparatus according to an embodiment of the present disclosure; as shown in Fig. 17, the apparatus includes a fifth communication unit 51, configured to receive first indication information sent by an access network device, and the first indication information is used to indicate support for rapid recovery from a state of network congestion.

In some optional embodiments of the present disclosure, the fifth communication unit 51 is further configured to send second notification information, wherein the second notification information is used to notify the recovery from the state of network congestion and/or adjust the data transmission mode.

In some optional embodiments of the present disclosure, the fifth communication unit 51 is further configured to switch from accessing the first access network device to accessing the second access network device through a cell handover process; and is also used to receive the first indication information sent by the second access network device.

In some optional embodiments of the present disclosure, the fifth communication unit 51 is further configured to receive a first message through the access network device, and the first message does not include congestion information.

In some optional embodiments of the present disclosure, the fifth communication unit 51 is configured to add the second notification information in an in-band message, wherein the in-band message is used to perform QoS guarantee based on the QoS requirement corresponding to the second notification information; or, send the second notification information in a constructed message; wherein the constructed message is used to perform QoS guarantee based on the QoS requirement corresponding to the second notification information.

In some optional embodiments of the present disclosure, in the case that the apparatus is applied to a UE, the fifth communication unit 51 is further configured to send capability indication information, wherein the capability indication information indicates that the UE supports a service that provides network congestion control.

In the embodiments of the present disclosure, the fifth communication unit 51 in the apparatus may be implemented in practical applications through a communication module (including: a basic communication kit, an operating system, a communication module, a standardized interface and a protocol, etc.) and a transceiver antenna.

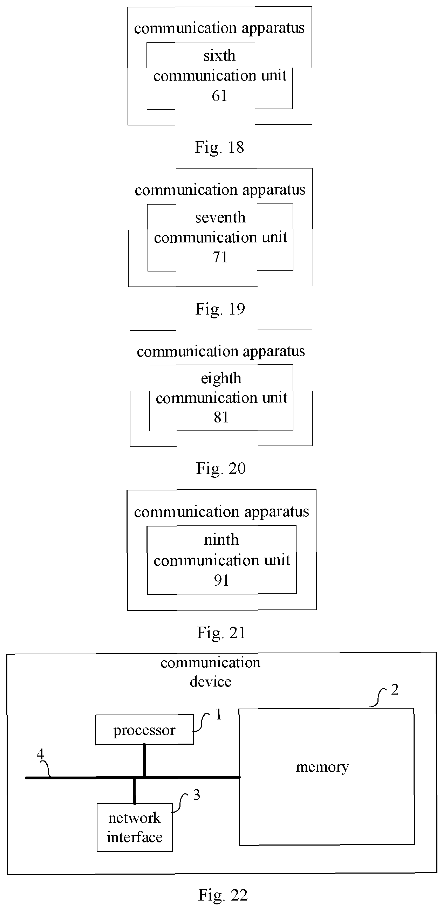

The embodiments of the present disclosure further provide a communication apparatus, applied to a second access network device. Fig. 18 is still yet another schematic structural diagram of the communication apparatus according to an embodiment of the present disclosure; as shown in Fig. 18, the apparatus includes a sixth communication unit 61, configured to receive first indication information sent by a first access network device or an AMF, wherein the first indication information is used to indicate support for rapid recovery from a state of network congestion; and the apparatus is further configured to send the second indication information to the UE when recovering from the congestion state, and the second indication information is used to indicate the recovery from the state of network congestion.

In some optional embodiments of the present disclosure, the sixth communication unit 61 is further configured to send a first message to the UE when recovering from the congestion state, and the first message does not include congestion information.

In the embodiments of the present disclosure, the sixth communication unit 61 in the apparatus may be implemented in practical applications through a communication module (including: a basic communication kit, an operating system, a communication module, a standardized interface and a protocol, etc.) and a transceiver antenna.

The embodiments of the present disclosure further provides a communication apparatus, applied to a first access network device. Fig. 19 is still yet another schematic structural diagram of the communication apparatus according to an embodiment of the present disclosure; as shown in Fig. 19, the apparatus includes a seventh communication unit 71, configured to receive first indication information, the first indication information is used to indicate support for rapid recovery from a state of network congestion; and send the first indication information to the second access network device.

In some optional embodiments of the present disclosure, the seventh communication unit 71 is configured to receive the first indication information through one or more network functions during a session establishment process.

In some optional embodiments of the present disclosure, the seventh communication unit 71 is configured to send the first indication information directly to the second access network device; or, to send the first indication information to the second access network device through a first AMF, wherein the first AMF is an AMF commonly accessed by both the first access network device and the second access network device; or, to send the first indication information to the second access network device through a third AMF and a second AMF, wherein the third AMF is an AMF accessed by the first access network device, and the second AMF is an AMF connected to the second access network device.

In the embodiments of the present disclosure, the seventh communication unit 71 in the apparatus may be implemented in practical applications through a communication module (including: a basic communication kit, an operating system, a communication module, a standardized interface and a protocol, etc.) and a transceiver antenna.

The embodiments of the present disclosure further provide a communication apparatus, applied to a PCF. Fig. 20 is still yet another schematic structural diagram of the communication apparatus according to an embodiment of the present disclosure; as shown in Fig. 20, the device includes an eighth communication unit 81, configured to receive second information from the AF, the second information includes first indication information, and the first indication information is used to indicate support for rapid recovery from a state of network congestion; and send the first indication information to the first access network device.

In some optional embodiments of the present disclosure, the eighth communication unit 81 is configured to send the first indication information to the first access network device through one or more network functions during a session establishment process.

In some optional embodiments of the present disclosure, the eighth communication unit 81 is configured to receive the second information from the AF through an NEF.

In the embodiments of the present disclosure, the eighth communication unit 81 in the apparatus may be implemented in practical applications through a communication module (including: a basic communication kit, an operating system, a communication module, a standardized interface and a protocol, etc.) and a transceiver antenna.

The embodiments of the present disclosure further provide a communication apparatus, applied to an AF. Fig. 21 is still yet another schematic structural diagram of the communication apparatus according to an embodiment of the present disclosure; as shown in Fig. 21, the apparatus includes a ninth communication unit 91, configured to send second information to the PCF, the second information includes first indication information, and the first indication information is used to indicate a state of network congestion.

In some optional embodiments of the present disclosure, the ninth communication unit 91 is configured to send the second information to the PCF through an NEF.

In the embodiments of the present disclosure, the ninth communication unit 91 in the apparatus may be implemented in practical applications through a communication module (including: a basic communication kit, an operating system, a communication module, a standardized interface and a protocol, etc.) and a transceiver antenna.

It should be noted that the communication apparatuses provided in the above embodiments are described with reference to the division of the program modules mentioned above during communication. In practical applications, the processing can be allocated to different program modules as needed-i.e., the internal structure of the apparatus can be divided into different program modules to accomplish all or part of the processes described above. Additionally, the communication apparatus described in the above embodiments and the communication method embodiments are based on the same concept. The specific implementations thereof are detailed in the method embodiments, which will not be repeated herein.

According to the above embodiments, it further provides a communication device, and the communication device may specifically be the first network function, the first function, the communication device, the network function, the second access network device, the first access network device, the PCF or the AF in the above embodiments. Fig. 22 is a schematic hardware structural diagram of the communication device according to an embodiment of the present disclosure. As shown in Fig. 22, the communication device includes a memory 2, a processor 1, and a computer program stored in the memory 2 and executable on the processor 1. When the processor 1 executes the program, the steps of the communication method applied to the first network function, the first function, the communication device, the network function, the second access network device, the first access network device, the PCF or the AF in the embodiments of the present disclosure are implemented.

Optionally, the communication device further includes at least one network interface 3. The various components in the communication device are coupled together through a bus system 4. It should be understood that the bus system 4 is used to enable the connection and communication between these components. In addition to the data bus, the bus system 4 further includes a power bus, a control bus and a status signal bus. However, for the sake of clarity, all buses are labeled as bus system 4 in Fig. 22.

It can be understood that the memory 2 may be a volatile memory or a non-volatile memory, and may also include both volatile and non-volatile memories. The non-volatile memory may be a Read-Only Memory (ROM), a programmable read-only memory (PROM), an erasable programmable read-only memory (EPROM), an electrically erasable programmable read-only memory (EEPROM), a magnetic random access memory (FRAM), a flash memory, a magnetic surface memory, an optical disc, or a Compact Disc Read-Only Memory (CD-ROM); the magnetic surface memory may be a disk memory or a tape memory. The volatile memory may be a Random Access Memory (RAM), which is used as an external high-speed cache. By way of example but not limitation, various forms of RAM can be used, such as Static Random Access Memory (SRAM), Synchronous Static Random Access Memory (SSRAM), Dynamic Random Access Memory (DRAM), Synchronous Dynamic Random Access Memory (SDRAM), Double Data Rate Synchronous Dynamic Random Access Memory (DDRSDRAM), Enhanced Synchronous Dynamic Random Access Memory (ESDRAM), Synchronous Link Dynamic Random Access Memory (SLDRAM), Direct Memory Bus Random Access Memory (DRRAM). According to the embodiments of the present disclosure, the memory 2 is intended to include, but is not limited to, the above memories and any other suitable types of memory.

The methods disclosed in the embodiments of the present disclosure can be applied to the processor 1, or implemented by the processor 1. The processor 1 may be an integrated circuit chip with signal processing capabilities. In the implementation processes, each step of the above-mentioned methods can be completed by the hardware integrated logic circuit in the processor 1 or the instruction in the form of software. The above-mentioned processor 1 can be a general-purpose processor, a DSP, or other programmable logic devices, discrete gates or transistor logic devices, discrete hardware components, etc. The processor 1 can implement or execute the methods, steps and logic block diagrams in the embodiments of the present disclosure. The general-purpose processor can be a microprocessor or any conventional processor, etc. The steps of the methods in the embodiments of the present disclosure can be directly implemented by hardware decoding processors or by a combination of hardware and software modules in the decoding processor. The software module can reside in a storage medium located in memory 2. The processor 1 reads the information in the memory 2 and executes the steps of the above-mentioned methods in combination with its hardware.

In an exemplary embodiments, the communication device may be implemented by one or more Application Specific Integrated Circuits (ASICs), DSPs, Programmable Logic Devices (PLDs), Complex Programmable Logic Devices (CPLDs), FPGAs, general purpose processors, controllers, MCUs, microprocessors, or other electronic components to perform the aforementioned methods.

In an exemplary embodiment, the present disclosure further provides a computer-readable storage medium, such as a memory 2 including a computer program, and the computer program can be executed by a processor 1 of a communication device to complete the steps of the aforementioned methods. The computer-readable storage medium may be a memory such as FRAM, ROM, PROM, EPROM, EEPROM, Flash Memory, magnetic surface memory, optical disk, or CD-ROM; or it can be various devices including one or any combination of the above memories.

The embodiments of the present disclosure further provide a computer-readable storage medium storing a computer program. In the embodiments of the present disclosure, when the program is executed by a processor, the steps of the communication methods applied to the first network function, the first function, the communication device, the network function, the second access network device, the first access network device, the PCF or the AF are implemented.

The methods in method embodiments of the present disclosure can be freely combined to obtain new method embodiments, as long as there is no conflict.

The features in product embodiments of the present disclosure can be freely combined to obtain new product embodiments, as long as there is no conflict.

The features in method or device embodiments of the present disclosure can be freely combined to obtain new method embodiments or device embodiments, as long as there is no conflict.

In the embodiments of the present application, it should be understood that the devices and methods can be implemented in other ways. The device embodiments described above are only schematic. For example, the division of the units is only a logical function division. In actual implementation, there may be other division methods. For instance, multiple units or components can be combined, or can be integrated into another system, or certain features can be ignored or not executed. In addition, the coupling, direct coupling, or communication connection between the components shown or discussed may be implemented through some interfaces, the indirect coupling or communication connection between the devices or units, and may take electrical, mechanical or other forms.

The units described above as separate components may or may not be physically separated, and the components displayed as units may or may not be physical units, that is, they may be located in one place or distributed across multiple network units; some or all of the units may be selected based on actual needs to achieve the objectives of the present disclosure.

In addition, all functional units in the embodiments of the present disclosure may be integrated into one processing unit, or each unit may exist physically alone, or two or more units may be integrated into one unit; the above-mentioned integrated units may be implemented in hardware form or as a combination of hardware and software functional units.

It can be understood by those of ordinary skill in the art that all or part of the steps of implementing the above-mentioned method embodiments can be implemented using hardware in conjunction with program instructions. The aforementioned program can be stored in a computer-readable storage medium, which, when executed, executes the steps of the above-mentioned method embodiments. The aforementioned storage media include: mobile storage devices, ROM, RAM, magnetic disks or optical disks and other media that can store program code.

Alternatively, when the integrated unit of the present disclosure is implemented in the form of a software functional unit and sold or used as an independent product, it may be stored in a computer-readable storage medium. Based on such an understanding, essential parts, or parts contributing to the related art, or the entirety or parts of the technical solutions of the present disclosure may be implemented in a form of a software product. The computer software product is stored in a storage medium, and includes instructions to cause a computer device (which can be a personal computer, a server, or a network device, etc.) to execute all or part of the methods described in various embodiments of the present disclosure. The aforementioned storage media include: mobile storage device, Read-Only Memory (ROM), Random Access Memory (RAM), magnetic disk or optical disc and other media that can store program code.

The above are merely specific embodiments of the present disclosure, and the scope of protection of the present disclosure is not limited thereto. Any changes or substitutions that can be easily conceived by those skilled in the art within the technical scope disclosed in the present disclosure shall fall within the protection scope of the present disclosure. Therefore, the protection scope of the present disclosure should be based on the protection scope of the claims.

## Claims

1. A communication method, comprising:
receiving, by a first network function, first information from a first function, wherein the first information is information related to network congestion control;
generating, by the first network function, policy information at least based on the first information, and sending, by the first network function, the policy information to another network function and/or User Equipment (UE).

2. The method according to claim 1, wherein the first information comprises at least one of the following:
service information;
a Quality of Service (QoS) requirement corresponding to service information;
congestion information;
a marking frequency or duration or time interval of congestion information;
notification information; or
a QoS requirement corresponding to notification information.

3. The method according to claim 1, wherein the sending the policy information to the other network function and/or UE comprises at least one of the following:
sending, by the first network function, the policy information to a Session Management Function (SMF);
sending, by the first network function, the policy information to a User Plane Function (UPF) through a SMF;
sending, by the first network function, the policy information to an access network device through an Access and Mobility Management Function (AMF); or
sending, by the first network function, the policy information to the UE through an AMF and an access network device.

4. The method according to any one of claims 1 to 3, wherein,
service information and QoS requirement corresponding to the service information in the first information are at least used by the UE and/or a UPF to identify data and perform QoS guarantee.

5. The method according to any one of claims 1 to 3, wherein,
the congestion information in the first information indicates that an access network device adds congestion information to a data packet when network congestion occurs; or indicates that a UPF adds congestion information to a data packet when network congestion occurs; or indicates that an access network device notifies a UPF to add congestion information to a data packet when network congestion occurs.

6. The method according to any one of claims 1 to 5, wherein,
a marking frequency, duration or time interval of the congestion information in the first information indicates a policy of adding congestion information to a data packet by an access network device or a UPF.

7. The method according to any one of claims 1 to 3, wherein the QoS requirement corresponding to the notification information is at least used to perform corresponding QoS guarantee for the notification information.

8. The method according to claim 1, wherein the generating, by the first network function, the policy information based on the first information, comprising:
during a session establishment process or a session modification process, generating, by the first network function, the policy information based on the first information.

9. A communication method, comprising:
sending, by a first function, first information to a first network function, wherein the first information is information related to network congestion control, and the first information is used to generate corresponding policy information.

10. The method according to claim 9, wherein the first information comprises at least one of the following:
service information;
a Quality of Service (QoS) requirement corresponding to service information;
congestion information;
a marking frequency or duration or time interval of congestion information;
notification information; or
a QoS requirement corresponding to notification information.

11. A communication method, comprising:
receiving, by a communication device, congestion information, and sending, by the communication device, first notification information, wherein the first notification information is used to notify that it is currently in a state of network congestion.

12. The method according to claim 11, further comprising:
receiving, by the communication device, policy information from a first network function, wherein the policy information is generated at least based on first information, the first information is information related to network congestion control, the communication device comprises a network device and/or a User Equipment (UE).

13. The method according to claim 12, wherein the first information comprises at least one of the following:
service information;
a Quality of Service (QoS) requirement corresponding to service information;
congestion information;
a marking frequency or duration or time interval of congestion information;
notification information; or
a QoS requirement corresponding to notification information.

14. The method according to claim 11 or 13, wherein the sending the first notification information comprises:
adding, by the communication device, the first notification information to an in-band message, wherein the in-band message is used to perform QoS guarantee based on the QoS requirement corresponding to the first notification information; or
constructing, by the communication device, a message, and sending, by the communication device, the first notification information in the constructed message, and the constructed message is used to perform QoS guarantee based on the QoS requirement corresponding to the first notification information.

15. The method according to claim 12 or 13, wherein the communication device comprises the UE;
service information and QoS requirement corresponding to the service information in the first information are at least used by the UE to identify data and perform QoS guarantee.

16. The method according to any one of claims 12 to 14, wherein the QoS requirement corresponding to the notification information in the first information is at least used to perform corresponding QoS guarantee for the notification information.

17. The method according to claim 11, wherein in the case that the communication device comprises a UE, the method further comprises:
sending, by the UE, capability indication information, wherein the capability indication information indicates that the UE supports network congestion control.

18. A communication method, comprising:
adding, by a network function, congestion information to a data packet when the network function detects network congestion, and sending, by the network function, the data packet where the congestion information is added.

19. The method according to claim 18, further comprising:
receiving, by the network function, policy information from a first network function, wherein the policy information is generated at least based on first information, and the first information is information related to network congestion control.

20. The method according to claim 19, wherein the first information comprises at least one of the following:
service information;
a Quality of Service (QoS) requirement corresponding to service information;
congestion information;
a marking frequency or duration or time interval of congestion information;
notification information; or
a QoS requirement corresponding to notification information.

21. The method according to claim 19, wherein the network function comprises at least one of an SMF, a UPF or an access network device;
the receiving, by the network function, the policy information from the first network function, comprising at least one of the following:
directly receiving, by the SMF, the policy information sent by the first network function;
receiving, by the UPF through the SMF, the policy information sent by the first network function; or
receiving, by the access network device through the AMF, the policy information sent by the first network function.

22. The method according to any one of claims 19 to 21, wherein service information and QoS requirement corresponding to the service information in the first information are at least used by a UPF to identify data and perform QoS guarantee.

23. The method according to any one of claims 19 to 21, wherein the congestion information in the first information indicates that an access network device adds the congestion information to the data packet when the network congestion occurs; or indicates that a UPF adds the congestion information to the data packet when the network congestion occurs; or indicates that an access network device notifies a UPF to add the congestion information to the data packet when the network congestion occurs.

24. The method according to any one of claims 19 to 21, wherein the marking frequency, duration or time interval of the congestion information in the first information indicates a policy of adding the congestion information to the data packet by an access network device or a UPF.

25. A communication method, comprising:
receiving, by a User Equipment (UE) or a second network function, first indication information sent by an access network device, wherein the first indication information is used to indicate support for rapid recovery from a state of network congestion.

26. The method according to claim 25, further comprising:
sending, by the UE or the second network function, second notification information, wherein the second notification information is used to notify the recovery from the state of network congestion and/or adjust the data transmission mode.

27. The method according to claim 25, wherein before the receiving, by the UE, the first indication information sent by the access network device, the method further comprises:
switching, by the UE through a cell handover process, from accessing a first access network device to accessing a second access network device;
the receiving, by the UE, the first indication information sent by the access network device comprises: receiving, by the UE, first indication information sent by the second access network device.

28. The method according to any one of claims 25 to 27, further comprising:
receiving, by the UE, a first message through the access network device, wherein the first message does not comprise congestion information.

29. The method according to claim 26, wherein the sending, by the UE or the second network function, the second notification information, comprising:
adding, by the UE or the second network function, the second notification information to an in-band message, wherein the in-band message is used to perform QoS guarantee based on a QoS requirement corresponding to the second notification information; or
sending, by the UE or the second network function, the second notification information in a constructed message, wherein the constructed message is used to perform QoS guarantee based on a QoS requirement corresponding to the second notification information.

30. The method according to claim 25, further comprising:
sending, by the UE, capability indication information, wherein the capability indication information indicates network congestion control of the UE.

31. A communication method, comprising:
receiving, by a second access network device, first indication information sent by a first access network device or an AMF, wherein the first indication information is used to indicate support for rapid recovery from a state of network congestion;
sending, by the second access network device, second indication information to a User Equipment (UE) when the second access network device recovers from the state of congestion, wherein the second indication information is used to indicate the recovery from the state of network congestion.

32. The method according to claim 31, wherein when the second access network device recovers from the state of congestion, the method further comprises:
sending, by the second access network, a first message to the UE, and the first message does not comprise congestion information.

33. A communication method, comprising:
receiving, by a first access network device, first indication information, wherein the first indication information is used to indicate support for rapid recovery from a state of network congestion;
sending, by the first access network device, the first indication information to a second access network device.

34. The method according to claim 33, wherein the receiving, by the first access network device, the first indication information, comprising:
during a session establishment process, receiving, by the first access network device, the first indication information through one or more network functions.

35. The method according to claim 33, wherein the sending, by the first access network device, the first indication information to the second access network device comprises:
directly sending, by the first access network device, the first indication information to the second access network device; or,
sending, by the first access network device, the first indication information to the second access network device through a first AMF, wherein the first AMF is an AMF commonly accessed by both the first access network device and the second access network device; or
sending, by the first access network device, the first indication information to the second access network device through a third AMF and a second AMF, the third AMF is an AMF accessed by the first access network device, and the second AMF is an AMF connected to the second access network device.

36. A communication method, comprising:
receiving, by a Policy Control Function (PCF), second information from an Application Function (AF), wherein the second information comprises first indication information, and the first indication information is used to indicate support for rapid recovery from a state of network congestion;
sending, by the PCF, the first indication information to a first access network device.

37. The method according to claim 36, wherein the sending, by the PCF, the first indication information to the first access network device, comprising:
during a session establishment process, sending, by the PCF, the first indication information to the first access network device through one or more network functions.

38. The method according to claim 36, wherein the receiving, by the PCF, the second information from the AF, comprising:
receiving, by the PCF, the second information from the AF through a Network Exposure Function (NEF).

39. A communication method, comprising:
sending, by an AF, second information to a PCF, wherein the second information comprises first indication information, and the first indication information is used to indicate support for rapid recovery from a state of network congestion.

40. The method according to claim 39, wherein the sending, by the AF, the second information to the PCF, comprising:
sending, by the AF, the second information to the PCF through an NEF.

41. A communication apparatus, applied to a first network function, wherein the communication apparatus comprises a first communication unit and a first processing unit; wherein,
the first communication unit is configured to receive first information from a first function, wherein the first information is information related to network congestion control;
the first processing unit is configured to generate policy information at least based on the first information;
the first communication unit is further configured to send the policy information to another network function and/or User Equipment (UE).

42. A communication apparatus, applied to a first function, wherein the communication apparatus comprises:
a second communication unit, configured to send first information to a first network function, the first information being information related to network congestion control, and the first information being used to generate corresponding policy information.

43. A communication apparatus, applied to a communication device, wherein the communication apparatus comprises:
a third communication unit, configured to receive congestion information and send first notification information, wherein the first notification information is used to notify that it is currently in a state of network congestion.

44. A communication apparatus, applied to a network function, wherein the communication apparatus comprises a second processing unit and a fourth communication unit; wherein,
the second processing unit is configured to add congestion information to a data packet when network congestion is detected;
the fourth communication unit is configured to send the data packet where the congestion information is added.

45. A communication apparatus, applied to a User Equipment (UE) or a second network function, wherein the communication apparatus comprises:
a fifth communication unit, configured to receive first indication information sent by an access network device, wherein the first indication information is used to indicate support for rapid recovery from a state of network congestion.

46. A communication apparatus, applied to a second access network device, wherein the communication apparatus comprises:
a sixth communication unit, configured to receive first indication information sent by a first access network device or an AMF, wherein the first indication information is used to indicate support for rapid recovery from a state of network congestion, wherein the sixth communication unit is further configured to send second indication information to a User Equipment (UE) when recovering from the congestion state, the second indication information being used to indicate recovery from the state of network congestion.

47. A communication apparatus, applied to a first access network device, wherein the communication apparatus comprises:
a seventh communication unit, configured to receive first indication information sent by a PCF, wherein the first indication information is used to indicate support for rapid recovery from a state of network congestion, and send the first indication information to a second access network device.

48. A communication apparatus, applied to a PCF, wherein the communication apparatus comprises:
an eighth communication unit, configured to receive second information from an AF, wherein the second information comprises first indication information, wherein the first indication information is used to indicate support for rapid recovery from a state of network congestion; and send the first indication information to a first access network device.

49. A communication apparatus, applied to an AF, wherein the communication apparatus comprises:
a ninth communication unit, configured to send second information to a PCF, wherein the second information comprises first indication information, and the first indication information is used to indicate support for rapid recovery from a state of network congestion.

50. A computer-readable storage medium storing a computer program, where the program, when executed by a processor, implements the steps of the method according to any one of claims 1 to 8; or
when the program is executed by a processor, the steps of the method according to claim 9 or 10 are implemented; or,
when the program is executed by a processor, the steps of the method according to any one of claims 11 to 17 are implemented; or,
when the program is executed by a processor, the steps of the method according to any one of claims 18 to 24 are implemented; or,
when the program is executed by a processor, the steps of the method according to any one of claims 25 to 30 are implemented; or,
when the program is executed by a processor, the steps of the method according to claim 31 or 32 are implemented; or,
when the program is executed by a processor, the steps of the method according to any one of claims 33 to 35 are implemented; or,
when the program is executed by a processor, the steps of the method according to any one of claims 36 to 38 are implemented; or,
when the program is executed by a processor, the steps of the method according to claim 39 or 40 are implemented.

51. A communication device comprising a memory, a processor and a computer program stored in the memory and executable on the processor, wherein the processor is configured to execute the program to implement the steps of the method according to any one of claims 1 to 8; or
the processor is configured to execute the program to implement the steps of the method according to claim 9 or 10; or,
the processor is configured to execute the program to implement the steps of the method according to any one of claims 11 to 17; or,
the processor is configured to execute the program to implement the steps of the method according to any one of claims 18 to 24; or,
the processor is configured to execute the program to implement the steps of the method according to any one of claims 25 to 30; or,
the processor is configured to execute the program to implement the steps of the method according to claim 31 or 32; or,
the processor is configured to execute the program to implement the steps of the method according to any one of claims 33 to 35; or,
the processor is configured to execute the program to implement the steps of the method according to any one of claims 36 to 38; or,
the processor is configured to execute the program to implement the steps of the method according to claim 39 or 40.
